# EUROPÄISCHE PATENTSCHRIFT

(11) **EP 1 010 973 B1**
(45) Veröffentlichungstag und Bekanntmachung des Hinweises auf die Patenterteilung: **18.07.2001**
(21) Anmeldenummer: 98123724.1
(22) Anmeldetag: 14.12.1998
(51) Int. Cl.: G01L 9/00, B23K 35/32

(54) **Kapazitive Druck- oder Differenzdruckmesszellen und Verfahren zu deren Herstellung**
Capacitive measuring cells for measuring pressure and differential pressure and method for making same
Capteurs capacitifs de pression et de pression différentielle et procédé de leur fabrication

(43) Veröffentlichungstag der Anmeldung: 21.06.2000
(73) Patentinhaber: Endress + Hauser GmbH + Co., 79689 Maulburg (DE)
(72) Erfinder: Drewes Ulfert, Dipl.-Phys., 79379 Müllheim (DE); Schmidt Elke, Dipl.-Phys., 79650 Schopfheim (DE); Rossberg Andreas, Dr., 79713 Bad Säckingen (DE); Hegner Frank, Dr., 79540 Lörrach (DE); Velten Thomas, Dipl.-Phys., 79664 Wehr (DE)
(74) Vertreter: Morstadt, Volker, Dipl.-Ing.

(56) Entgegenhaltungen:
- EP-A- 0 735 353
- EP-A- 0 834 487
- EP-A- 0 835 716
- US-A- 4 829 826
- US-A- 5 050 034
- US-A- 5 334 344
- US-A- 5 712 428

## Beschreibung

Die Erfindung betrifft kapazitive keramische Druck- oder Differenzdruckmeßzellen und Verfahren zu deren Herstellung.

Üblicherweise umfaßt eine derartige Druckmeßzelle einen keramischen Grundkörper und eine keramische Membran, die den Grundkörper überdeckt und davon so beabstandet ist, daß zwischen der Membran und einer ihr zugewandten Fläche des Grundkörpers eine Meßkammer gebildet wird. Die einander zugewandten Flächen von Grundkörper und Membran sind mit Elektroden versehen, die zusammen einen Kondensator bilden, mit dem ein elektrisches Signal gewonnen wird, das einem auf die Membran einwirkenden und sie verformenden Druck eines Prozeßmediums entspricht. Im Falle einer Druck-Überlastung dient der Grundkörper als Begrenzer für die Bewegung der Membran.

Zum Messen einer Differenz zweier Drücke (Differenzdruck) wird üblicherweise für jeden Druck eine Meßkammer verwendet, wobei die Meßkammern untereinander räumlich und mechanisch verbunden und jeweils mit einer Meßkapazität ausgestattet sind. Auf diese Weise ist es möglich, ein elektrisches Signal zu erzeugen, das der Differenz aus einem auf die eine Meßkammer wirkenden Druck und eines auf die andere Meßkammer wirkenden Drucks entspricht.

Ein besonderes Problem bei keramischen Druckmeßzellen besteht darin, die Membran in ihrem Randbereich derart auf dem Grundkörper zu befestigen und zu fügen ist, daß die Fügung gas- und flüssigkeitsdicht ist und hohen Zug- und Druckbelastungen widersteht. Darüber hinaus soll die Fügung langzeitstabil und frei von Relaxaticns-Effekten sein.

In der Vergangenheit bei keramischen Druckmeßzellen verwendete Fügungen aus Glaslot genügen den oben erwähnten Anforderungen nicht in vollen Umfang. Deshalb wurde auf eine Fügung mittels eines Aktivhartlots übergegangen.

So ist in der US-A 50 50 034 eine kapazitive Druckmeßzelle beschrieben
- mit einem keramischen Grundkörper, der
   -- eine Mantelfläche und
   -- an einer ersten Oberfläche eine Zentralfläche hat, die
      --- mit einer ersten Elektrode versehen ist, und
      --- eine elektrische Durchkontaktierung der ersten Elektrode zu einer zweiten Oberfläche hin aufweist, und
- mit einer keramischen Membran,
   -- die mittels eines plan-parallelen Ringes aus Aktivhartlot mit dem Grundkörper zur Schaffung einer hochvakuum-dichten Meßkammer gefügt ist,
      --- wobei auf einer dem Grundkörper zugewandten ebenen Innenfläche der Membran eine zweite Elektrode angebracht ist.

Zwar erfüllt die Aktivhartlot-Fügung die oben erwähnten Anforderungen nach hoher Stabilität, aber in bestimmten Fällen von Druck-Überlastung der Membran hat sich gezeigt, daß die Membran nicht in zufriedenstellender Weise auf dem Grundkörper abgestützt werden kann. Wegen des "kantigen" Aufbaus des Aktivhartlotringes, der als Abstandshalter zwischen Grundkörper und Membran dient, können, insbesondere im Randbereich der Membran, Zugspannungen auftreten, die zu einem Versagen der Membran führen.

Die US-A 48 29 826 beschreibt eine kapazitive Differenzdruckmeßzelle
- mit einem Grundkörper, der
   -- eine Randfläche und
   -- an einer ersten Oberflache eine konkave erste Zentralfläche hat, die
      --- mit einer ersten Elektrcde versehen ist,
      --- eine erste elektrische Kontaktierung der ersten Elektrode aufweist und
      --- in Richtung auf die Randfläche in eine konvexe erste Fläche übergeht, die
         ---- eine mit der Randfläche sich schneidende erste Scheitellinie aufweist und
         ---- im Bereich der ersten Scheitellinie als eine erste ebene Ringfläche ausgebildet ist,
   -- welcher Grundkörper ferner an einer der ersten Oberfläche gegenüberliegenden zweiten Oberfläche eine konkave zweite Zentralfläche hat, die
      --- mit einer zweiten Elektrode versehen ist,
      --- eine zweite elektrische Kontaktierung der zweiten Elektrode aufweist und
      --- in Richtung auf die Randfläche in eine konvexe zweite Fläche übergeht, die
         ---- eine mit der Randfläche sich schneidende zweite Scheitellinie aufweist und
         ---- im Bereich der zweiten Scheitellinie als eine zweite ebene Ringfläche ausgebildet ist, und
   -- der mit einem Verbindungskanal zwischen der ersten und der zweiten Zentralfläche versehen ist,
- mit einer ersten keramischen Membran,
   -- die auf der ersten Ringfläche des Grundkörpers aufliegt und dort fixiert ist,
   -- wobei auf einer dem Grundkörper zugewandten ebenen Innenfläche der ersten Membran eine dritte Elektrode angebracht ist, und
- mit einer zweiten keramischen Membran,
   -- die auf der zweiten Ringfläche des Grundkörpers aufliegt und dort fixiert ist,
   -- wobei auf einer dem Grundkörper zugewandten ebenen Innenfläche der zweiten Membran eine vierte Elektrode angebracht ist.

Bei dieser vorbeschriebenen Differenzdruckmeßzelle reichen die Ringflächen, die der alleinigen Verbindung der jeweiligen Membranen mit dem Grundkörper dienen, bis zu dessen Mantelfläche. Die Art und Weise der Verbindung wird nicht näher erläutert.

Es hat sich gezeigt, daß die alleinige Verbindung mittels der Ringflächen unzureichend ist, insbesondere wenn an diesen große achs-parallele Kräfte auftreten. Außerdem kann mit dieser alleinigen Verbindung nicht erreicht werden, daß die Verbindung hoch-vakuumdicht und langzeitstabil ist.

Es ist daher eine Aufgabe der Erfindung, kapazitive Druckmeßzellen bzw. Differenzdruckmeßzellen anzugeben, bei denen die Verbindung von Grundkörper und Membranen auch noch im Überlastfall sowohl druck- und/oder zugfest als auch hoch-vakuumdicht und langzeitstabil ist.

Zur Lösung dieser Aufgabe besteht eine erste Variante der Erfindung in einer kapazitiven Druckmeßzelle
- mit einem keramischen Grundkörper, der
   -- eine Mantelfläche und
   -- an einer ersten Oberflache eine konkave Zentralfläche hat, die
      --- mit einer ersten Elektrode versehen ist,
      --- eine elektrische Durchkontaktierung der ersten Elektrode zu einer zweiten Oberfläche hin aufweist und
      --- in Richtung auf die Mantelfläche und bis zu dieser in eine konvexe, eine Scheitellinie aufweisende Fläche übergeht,
         ---- die im Bereich der Scheitellinie als ebene Ringfläche ausgebildet ist,
- mit einer keramischen Membran,
   -- die auf der Ringfläche des Grundkörpers aufliegt und
   -- die auf der Ringfläche und zwischen Mantelfläche und Ringfläche unter Bildung einer umlaufenden Keilzone mittels eines Aktivhartlots mit dem Grundkörper zur Schaffung einer hochvakuum-dichten Meßkammer gefügt ist,
   -- wobei auf einer dem Grundkörper zugewandten ebenen Innenfläche der Membran eine zweite Elektrode angebracht ist,
      --- die über die Keilzone kontaktiert ist.

Zur Lösung der genannten Aufgabe besteht eine zweite Variante der Erfindung in einer kapazitiven Differenzdruckmeßzelle
- mit einem keramischen Grundkörper, der
   -- eine Mantelfläche und
   -- an einer ersten Oberfläche eine konkave erste Zentralfläche hat, die
      --- mit einer ersten Elektrode versehen ist,
      --- eine erste elektrische Durchkontaktierung der ersten Elektrode zur Mantelfläche hin aufweist und
      --- in Richtung auf die Mantelfläche und bis zu dieser in eine konvexe, eine erste Scheitellinie aufweisende erste Fläche übergeht,
         ---- die im Bereich der ersten Scheitellinie als eine erste ebene Ringfläche ausgebildet ist,
   -- welcher Grundkörper ferner an einer der ersten Oberfläche gegenüberliegenden zweiten Oberfläche eine konkave zweite Zentralfläche hat, die
      --- mit einer zweiten Elektrode versehen ist,
      --- eine zweite elektrische Durchkontaktierung der zweiten Elektrode zur Mantelfläche hin aufweist und
      --- in Richtung auf die Mantelflache und bis zu dieser in eine konvexe, eine zweite Scheitellinie aufweisende zweite Fläche übergeht,
         ---- die im Bereich der zweiten Scheitellinie als eine zweite ebene Ringfläche ausgebildet ist, und
   -- mit einem Verbindungskanal zwischen der ersten und der zweiten Zentralfläche versehen ist,
- mit einer ersten keramischen Membran,
   -- die auf der ersten Ringfläche des Grundkörpers aufliegt und
   -- die auf der ersten Ringfläche und zwischen Mantelfläche und erster Ringfläche unter Bildung einer ersten umlaufenden Keilzone mittels eines Aktivhartlots mit dem Grundkörper zur Schaffung einer ersten hochvakuum-dichten Meßkammer gefügt ist, und
   -- wobei auf einer dem Grundkörper zugewandten ebenen Innenfläche der ersten Membran eine dritte Elektrode angebracht ist,
      --- die über die erste Keilzone kontaktiert ist,
- mit einer zweiten keramischen Membran,
   -- die auf der zweiten Ringfläche des Grundkörpers aufliegt und
   -- die auf der zweiten Ringfläche und zwischen Mantelfläche und zweiter Ringfläche unter Bildung einer zweiten umlaufenden Keilzone mittels eines Aktivhartlots mit dem Grundkörper zur Schaffung einer zweiten hcchvakuumdichten Meßkammer gefügt ist,
   -- wobei auf einer dem Grundkörper zugewandten ebenen Innenfläche der zweiten Membran eine vierte Elektrode angebracht ist,
      --- die über die zweite Keilzone kontaktiert ist.

Zur Lösung der genannten Aufgabe besteht eine dritte Variante der Erfindung in einer kapazitiven Differenzdruckmeßzelle
- mit einem ersten keramischen Grundkörper, der
   -- eine erste Mantelfläche und
   -- an einer ersten Oberfläche eine konkave erste Zentralfläche hat, die
      --- mit einer ersten Elektrode versehen ist,
      --- eine erste elektrische Durchkontaktierung für die erste Elektrode zu einer der ersten Oberfläche gegenüberliegenden zweiten Oberfläche hin aufweist und
      --- in Richtung auf die erste Mantelfläche und bis zu diesem in eine konvexe, eine erste Scheitellinie aufweisende erste Fläche übergeht,
         ---- die im Bereich der ersten Scheitellinie als eine erste ebene Ringfläche ausgebildet ist,
- mit einem zweiten keramischen Grundkörper, der
   -- eine zweite Mantelfläche und
   -- an einer ersten Oberfläche eine konkave zweite Zentralfläche hat, die
      --- mit einer zweiten Elektrode versehen ist,
      --- eine zweite elektrische Durchkontaktierung für die zweite Elektrode zu einer der ersten Oberfläche gegenüberliegenden zweiten Oberfläche hin aufweist und
      --- in Richtung auf die zweite Mantelfläche und bis zu dieser in eine konvexe, eine zweite Scheitellinie aufweisende zweite Fläche ubergeht,
         ---- die im Bereich der zweiten Scheitellinie als eine zweite ebene Ringfläche ausgebildet ist, und
- mit einer keramischen Membran, die
   -- auf der ersten Ringfläche des ersten Grundkörpers mit einer ersten Oberfläche aufliegt,
   -- auf der ersten Ringfläche und zwischen erster Mantelfläche und erster Ringfläche des ersten Grundkörpers unter Bildung einer ersten umlaufenden Keilzone mittels eines Aktivhartlots mit dem ersten Grundkörper zur Schaffung einer ersten hochvakuum-dichten Meßkammer gefügt ist,
   -- auf der zweiten Ringfläche des zweiten Grundkörpers mit einer zweiten Oberfläche aufliegt und
   -- auf der zweiten Ringfläche und zwischen zweiter Mantelfläche und zweiter Ringfläche des zweiten Grundkörpers unter Bildung einer zweiten umlaufenden Keilzone mittels eines Aktivhartlots mit dem zweiten Grundkörper zur Schaffung einer zweiten hochvakuum-dichten Meßkammer gefügt ist,
   -- wobei auf der ersten Oberfläche der Membran eine dritte Elektrode angebracht ist,
      --- die über die erste Keilzone kontaktiert ist, und
   -- wobei auf der zweiten Oberfläche eine vierte Elektrode angebracht ist,
      --- die über die zweite Keilzone kontaktiert ist.

Zur Lösung der genannten Aufgabe besteht eine vierte Variante der Erfindung in einem Verfahren zur Herstellung einer kapazitiven Druckmeßzelle mit folgenden Schritten:
- Ein keramischer Grundkörper wird an einer ersten Oberfläche mit einer konkaven Zentralfläche versehen,
   -- die in Richtung auf eine Mantelfläche des Grundkörpers und bis zu diesem in eine konvexe, eine Scheitellinie aufweisende Fläche übergeht,
      --- die im Bereich der Scheitellinie als eine ebene Ringfläche ausgebildet wird,
- auf die Zentralfläche wird eine erste Elektrode aufgebracht und zu einer der ersten Oberfläche gegenüberliegenden zweiten Oberfläche des Grundkörpers hin durchkontaktiert,
- eine mit der ersten Oberfläche des Grundkörpers deckungsgleiche keramische Membran wird auf einer ebenen Oberfläche mit einer derart dimensionierten zweiten Elektrode versehen, daß sie nach einem spateren Auflegen der Membran auf die Ringfläche des Grundkörpers bis zu dieser reicht,
- auf zwischen der Ringfläche und der Mantelfläche liegende Teile der konvexen Fläche wird eine zum Hartverlöten von Membran und Grundkörper ausreichende Menge Aktivhartlot aufgebracht,
- die mit der zweiten Elektrode versehene Oberfläche der Membran wird auf die Ringfläche des Grundkörpers aufgelegt, und
- Grundkörper und Membran werden unter Vakuum- oder Schutzgasatmosphäre bis zum Schmelzen des Aktivhartlots erhitzt und danach erkalten gelassen.

Zur Lösung der genannten Aufgabe besteht eine fünfte Variante der Erfindung in einem Verfahren zur Herstellung einer kapazitiven Differenzdruckmeßzelle mit folgenden Schritten:
- Ein keramischer Grundkörper wird an einer ersten Oberfläche mit einer konkaven ersten Zentralfläche versehen,
   -- die in Richtung auf eine Mantelfläche und bis zu dieser in eine konvexe, eine erste Scheitellinie aufweisende erste Fläche übergeht,
      --- die im Bereich der ersten Scheitellinie als eine erste ebene Ringfläche ausgebildet wird,
- auf die erste Zentralfläche wird eine erste Elektrode aufgebracht und zur Mantelfläche des Grundkörpers hin durchkontaktiert,
- der Grundkörper wird ferner an einer der ersten Oberfläche gegenüberliegenden zweiten Oberfläche mit einer konkaven zweiten Zentralfläche versehen,
   -- die in Richtung auf die Mantelfläche des Grundkörpers und bis zu dieser in eine konvexe, eine zweite Scheitellinie aufweisende zweite Fläche übergeht,
      --- die im Bereich der zweiten Scheitellinie als eine zweite ebene Ringfläche ausgebildet wird,
- auf die zweite Zentralfläche wird eine zweite Elektrode aufgebracht und zur Mantelfläche des Grundkörpers hin durchkontaktiert,
- eine mit der ersten Oberfläche des Grundkörpers deckungsgleiche erste keramische Membran wird auf einer ebenen Innenfläche mit einer derart dimensionierten dritten Elektrode versehen,
   -- daß diese nach einem späteren Auflegen der ersten Membran auf die erste Ringfläche des Grundkörpers bis zu dieser reicht,
- eine mit der zweiten Oberfläche des Grundkörpers deckungsgleiche zweite keramische Membran wird auf einer ebenen Innenfläche mit einer derart dimensionierten vierten Elektrode versehen,
   -- daß diese nach einem späteren Auflegen der zweiten Membran auf die zweite Ringfläche des Grundkörpers bis zu dieser reicht,
- auf zwischen der ersten Ringfläche und der Mantelfläche liegende Teile der konvexen ersten Flache des Grundkörpers und auf zwischen der zweiten Ringflacne und der Mantelfläche liegende Teile der konvexen zweiten Fläche des Grundkörpers wird jeweils eine zum Hartverlöten von erster bzw. zweiter Membran mit dem Grundkörper ausreichende Menge Aktivhartlot aufgebracht,
- die mit der dritten Elektrode versehene Oberfläche der ersten Membran wird auf die erste Ringfläche des Grundkörpers aufgelegt,
- die mit der vierten Elektrode versehene Oberfläche der zweiten Membran wird auf die zweite Ringfläche des Grundkörpers aufgelegt, und
- Grundkörper und Membranen werden unter Vakuum- oder Schutzgasatmosphäre bis zum Schmelzen des Aktivhartlots erhitzt und danach erkalten gelassen.

Zur Lösung der genannten Aufgabe besteht eine sechste Variante der Erfindung in einem Verfahren zur Herstellung einer kapazitiven Differenzdruckmeßzelle mit folgenden Schritten:
- Ein erster keramischer Grundkörper wird an einer ersten Oberfläche mit einer konkaven ersten Zentralfläche versehen,
   -- die in Richtung auf eine erste Mantelfläche des ersten Grundkörpers und bis zu dieser in eine konvexe, eine erste Scheitellinie aufweisende erste Fläche übergeht,
      --- die im Bereich der ersten Scheitellinie als eine erste ebene Ringflache ausgebildet wird,
- auf die erste Zentralfläche wird eine erste Elektrode aufgebracht und zu einer der ersten Oberfläche gegenüberliegenden zweiten Oberfläche des ersten Grundkörpers hin durchkontaktiert,
- ein zweiter keramischer Grundkörper wird an einer ersten Oberfläche mit einer konkaven zweiten Zentralfläche versehen,
   -- die in Richtung auf eine zweite Mantelfläche des zweiten Grundkörpers und bis zu diesem in eine konvexe, eine zweite Scheitellinie aufweisende zweite Fläche übergeht,
      --- die im Bereich der zweiten Scheitellinie als eine zweite ebene Ringfläche ausgebildet wird,
- auf die zweite Zentralfläche wird eine zweite Elektrode aufgebracht und zu einer der ersten Oberfläche gegenüberliegenden zweiten Oberfläche des zweiten Grundkörpers hin durchkontaktiert,
- eine mit der ersten Oberfläche des ersten Grundkörpers deckungsgleiche, keramische Membran wird auf einer ebenen ersten Oberfläche mit einer derart dimensionierten dritten Elektrode versehen,
   -- daß diese nach einem späteren Auflegen der Membran auf die erste Ringfläche des ersten Grundkörpers bis zu dieser reicht,
- eine der ersten Oberfläche gegenüberliegende ebene zweite Oberfläche der Membran wird mit einer derart dimensionierten vierten Elektrode versehen,
   -- daß diese nach einem späteren Auflegen der Membran auf die erste Ringfläche des zweiten Grundkörpers bis zu dieser reicht,
- auf zwischen der ersten Ringfläche und der ersten Mantelfläche liegende Teile der konvexen ersten Fläche des ersten Grundkörpers und auf zwischen der zweiten Ringfläche und der zweiten Mantelfläche liegende Teile der konvexen zweiten Fläche des zweiter. Grundkörpers wird jeweils eine zum Hartverlöten der Membran mit dem ersten bzw. dem zweiten Grundkörper ausreichende Menge Aktivhartlot aufgebracht,
- die mit der dritten Elektrode versehene erste Oberfläche der Membran wird auf die erste Ringfläche des ersten Grundkörpers aufgelegt,
- die mit der vierten Elektrode versehene zweite Oberfläche der Membran wird auf die zweite Ringfläche des zweiten Grundkörpers aufgelegt, und
- Grundkörper und Membran werden unter Vakuum- oder Schutzgasatmosphäre bis zum Schmelzen des Aktivhartlots erhitzt und danach erkalten gelassen.

Eine jeweilige vorteilhafte Ausgestaltung der ersten bis dritten Variante der Erfindung sieht vor, daß der Grundkörper bzw. die Grundkörper und die Membran bzw. die Membranen aus einer Aluminiumoxid-Keramik und das Aktivhartlot aus einer Zr/Fe/Ti/Be-Legierung oder aus einer Zr/Ni/Ti-Legierung bestehen.

Bei einer jeweiligen vorteilhaften Weiterbildung der ersten bis dritten Variante der Erfindung sind mindestens die Elektrode der Membran bzw. der Membranen wenigstens in einem jeweiligen Randbereich mit einem Lötstop-Überzug bedeckt.

Bei einer vorteilhaften Weiterbildung der vierten bis fünften Variante der Erfindung wird mindestens die Elektrode der Membran bzw. der Membranen wenigstens in einem jeweiligen Randbereich mit einem Lötstop-Uberzug bedeckt.

Die Erfindung beruht auf dem Grundgedanken, Membran und Grundkörper an einer Fügestelle nicht mehr wie bisher durch eine Aktivhartlotmenge auf Abstand voneinander zu halten, sondern Membran und Grundkörper außerhalb der Stelle, wo sie aufeinander aufliegen, mittels einer solchen Menge Aktivhartlot zu verlöten, daß die Langzeitstabilität und die Hochvakuum-Dichtheit gesichert ist.

Ein Vorteil der Erfindung besteht darin, daß das Volumen der Meßkammer nicht wie bisher von der Dicke des Aktivhartlotringes und dadurch bedingten Fertigungstoleranzen nach dem Verlöten abhängt.

Ein weiterer Vorteil der Erfindung besteht darin, daß kein teures Formteil aus Aktivhartlot mehr erforderlich ist. Solche Formteile müssen nämlich durch das aufwendige sogenannte Melt-Spinning-Verfahren hergestellt werden.

Die Erfindung eignet sich in besonderer Weise für ein automatisiertes Aufbringen einer Aktivhartlotpaste mittels eines Dispensers. Die besondere Formgebung und Anordnung der Fügung von Membran und Grundkörper gewährleistet, daß in einer Aktivhartlotpaste üblicherweise enthaltene Lösungsmittel rückstandsfrei aus der Fügezone entweichen.

Darüber hinaus besteht ein anderer Vorteil der Erfindung darin, daß die besondere Formgebung des bzw. der Grundkörper im Bereich der Fugung der Membran bzw. der Membranen sicherstellt, daß keinerlei Aktivhartlot in die Meßkammer bzw. die Meßkammern eindringt.

Die Erfindung wird nun anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert, wird auf bereits erwähnte Bezugszeichen in nachfolgenden Figuren verzichtet.
Fig. 1a zeigt perspektivisch und schematisch einen Grundkörper einer Druckmeßzelle einer ersten Variante der Erfindung;
Fig. 1b zeigt perspektivisch und schematisch eine Membran der Druckmeßzelle nach Fig. 1a;
Fig. 2 zeigt schematisch einen Vertikalschnitt der ersten Variante der Erfindung;
Fig. 3a zeigt in vergrößertem Maßstab eine Einzelheit E der Druckmeßzelle nach Fig. 2 vor der Fügung der Membran;
Fig. 3b zeigt die Einzelheit E der Druckmeßzelle nach Fig. 3a nach der Fügung der Membran;
Fig. 4 zeigt schematisch einen Vertikalschnitt einer zweiten Variante der Erfindung; und
Fig. 5 zeigt schematisch einen Vertikalschnitt einer dritten Variante der Erfindung.

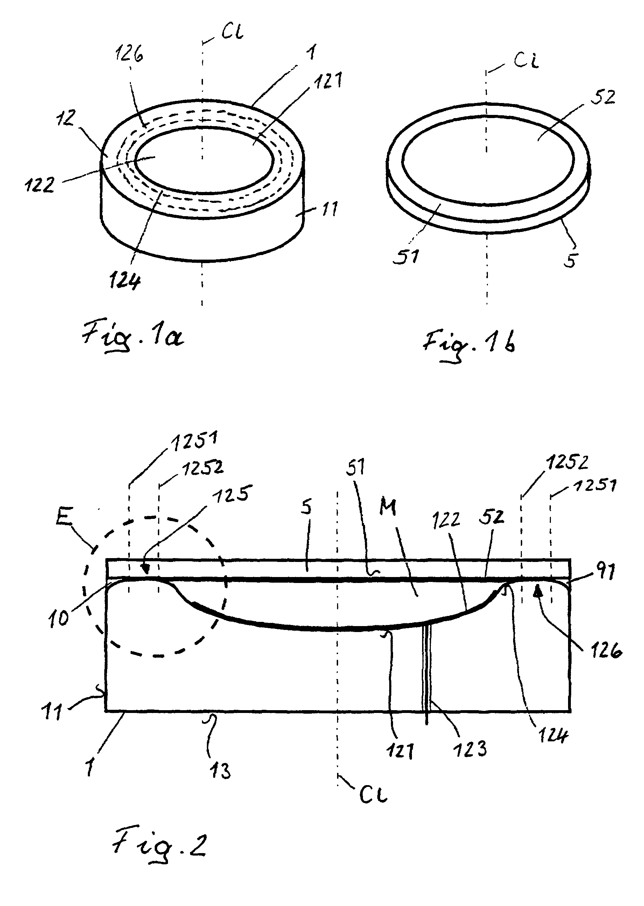

In Fig. 1a ist ein keramischer Grundkörper 1 einer kapazitive Druckmeßzelle perspektivisch dargestellt, der eine Mantelfläche 11 und an einer ersten Oberfläche 12 eine konkave Zentralfläche 121 hat, die mit einer ersten Elektrode 122 versehen ist. Die Zentralfläche 121 geht in Richtung auf die Mantelfläche 11 und bis zu dieser in eine konvexe, eine Scheitellinie 125 aufweisende Fläche 124 über, die im Bereich der Scheitellinie 125 als ebene Ringfläche 126 ausgebildet ist (siehe dazu auch Fig. 2).

In Fig. 1b ist eine keramische Membran 5 perspektivisch dargestellt, auf deren, bei späterer Fixierung auf dem in Fig. 1a dargestellten Grundkörper 1 zugewandten ebenen Innenfläche 51 eine Elektrode 52 angebracht ist, die eine zweite Elektrode der Druckmeßzelle ist.

Fig. 2 zeigt einen Vertikalschnitt durch eine Druckmeßzelle nach der ersten Variante der Erfindung. Die in Fig. 1b dargestellte keramische Membran 5 liegt auf der Ringfläche 126 des Grundkörpers und bildet mit jenem Teil der konvexen Fläche 124, der sich zwischen der Ringfläche 126 und der Mantelfläche 11 erstreckt, eine umlaufende Keilzone 91. Mittels eines Aktivhartlots 10 in der Keilzone 91 ist die Membran 5 mit dem Grundkörper 1 so gefügt, daß eine hochvakuum-dichte Meßkammer M entstanden ist. Die Elektrode 52 der Membran 5 ist über die Keilzone 91 kontaktiert. Eine elektrische Durchkontaktierung 123 der Elektrode 122 verläuft zu einer zweiten Oberfläche 13 des Grundkörpers 1 hin. Die Elektrode 122 bildet zusammen mit der Elektrode 52 einen Meßkondensator, mit dem ein Signal gewonnen wird, das einem auf die Membran 5 einwirkenden Druck entspricht. In Fig. 2 ist deutlich zu sehen, in welcher Weise die Zentralfläche 121 in Richtung auf die Mantelfläche 11 und bis zu dieser in die konvexe Fläche 124 übergeht. Im Bereich der Scheitellinie 125 ist die konvexe Fläche 124 in dem in Fig. 2 durch gestrichelte Linien 1251 und 1252 verdeutlichten Bereich als ebene Ringfläche 126 ausgebildet.

Eine Mittellinie CL veranschaulicht, daß die Druckmeßzelle vorzugsweise rotationssymetrisch ist.

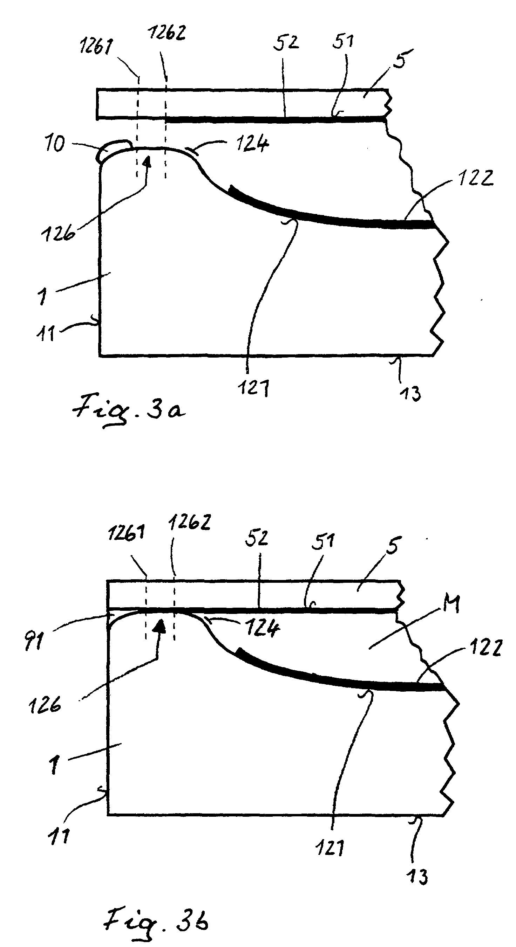

Fig. 3a zeigt vergrößert die Einzelheit E der Druckmeßzelle nach Fig. 2 vor der Fügung der Membran 5 mit dem Grundkörper 1. Es ist besonders gut erkennbar, wie die Zentralfläche 121 in Richtung auf die Mantelfläche 11 und bis zu dieser in die konvexe Fläche 124 übergeht. In dem durch gestrichelte Linien 1261 und 1262 veranschaulichten Bereich der Scheitellinie 125 ( siehe auch Fig. 2) ist die konvexe Fläche 124 als ebene Ringfläche 126 ausgebildet.

Die Elektrode 52 der Membran 5 reicht bis an jenen Bereich der Innenfläche 51 der Membran 5 heran, der auf den Grundkörper 1 zu liegen kommt. Demgegenüber befindet sich die Elektrode 122 nur in der konkaven Zentralfläche 121 des Grundkörpers 1 und reicht nicht bis zur konvexen Fläche 124.

Bevor die Membran 5 auf den Grundkörper 1 aufgesetzt wird, wird auf jenen Teil der konvexen Fläche 124 des Grundkörpers 1, der sich zwischen der Mantelfläche 11 und der Ringfläche 126 erstreckt, das Aktivhartlot 10 aufgebracht. Vorzugsweise wird dazu eine Aktivhartlot-Paste verwendet, die mittels eines geeigneten Dispensers und in einer für die Fügung von Membran 5 und Grundkörper 1 hinreichenden Menge aufgebracht wird. Es sind aber auch andere Verfahren denkbar, mit denen das Aktivhartlot 10 auf dem Grundkörper 1 aufgebracht werden kann.

Nach der Fügung von Membran 5 und Grundkörper 1 füllt das ausgehärtete Aktivhartlot 10, wie Fig. 3b zeigt, die zwischen Membran 5 und Grundkörper 1 gebildete Keilzone 91 aus. Obwohl die Membran 5 für ihre Fügung auf der ebenen Ringfläche 126 fest aufliegt, werden wegen des verwendeten keramischen Materials von Grundkörper und Membran zwischen diesen mikroskopisch kleine Poren mit Durchmessern in der Größenordnung ihrer Korngrößen gebildet. Aufgrund seiner Benetzungseigenschaften wandert das Aktivhartlot 10 in den erwähnten Poren zwischen Membran 5 und Ringfläche 126 des Grundkörpers 1 von der Keilzone 91 bis zu einem inneren Rand der Ringfläche 126 bzw. bis zur Elektrode 52. Diese wird vom Aktivhartlot 10 benetzt, so daß eine elektrische Verbindung zwischen der Keilzone 91 und der Elektrode 52 entsteht.

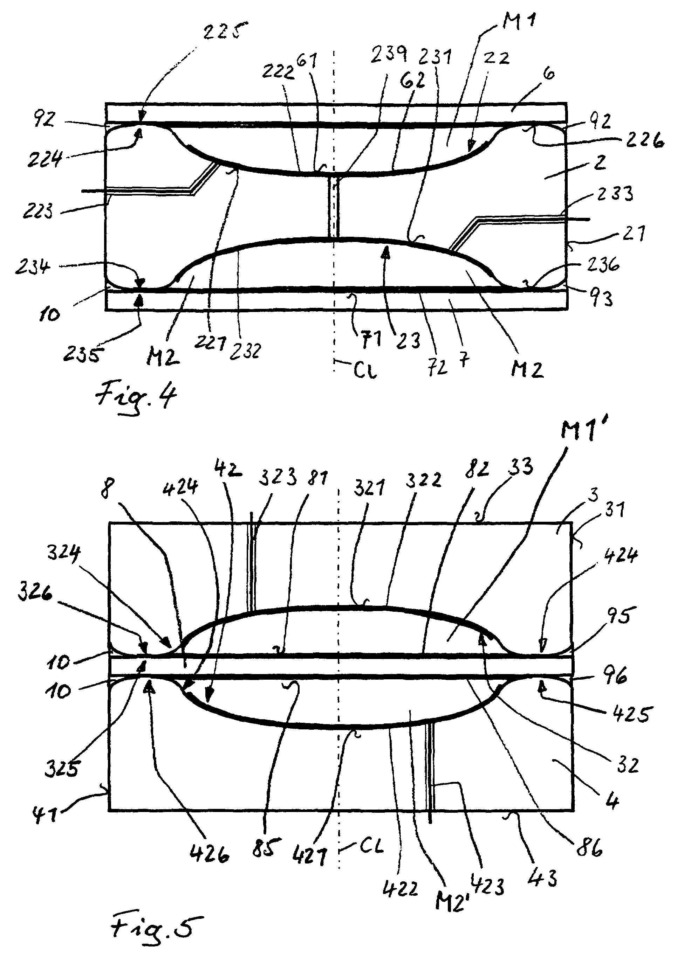

In Fig. 4 ist schematisch im Vertikalschnitt eine kapazitive Differenzdruckmeßzelle nach einer zweiten Variante der Erfindung mit einem keramischen Grundkörper 2 dargestellt, der eine Mantelfläche 21 und an einer ersten Oberfläche 22 eine konkave erste Zentralfläche 221 hat, die mit einer ersten Elektrode 222 versehen ist. Diese weist eine erste elektrische Durchkontaktierung 223 zur Mantelfläche 21 hin auf.

In Richtung auf die Mantelfläche 21 und bis zu dieser geht die Zentralfläche 221 in eine konvexe erste Fläche 224 über, die eine erste Scheitellinie 225 aufweist und die im Bereich der Scheitellinie 225 als eine erste ebene Ringfläche 226 ausgebildet ist.

Der Grundkorper 2 hat ferner an einer der Oberfläche 22 gegenüberliegenden zweiten Oberfläche 23 eine konkave zweite Zentralfläche 231, die mit einer zweiten Elektrode 232 versehen ist. Diese weist eine zweite elektrische Durchkontaktierung 233 zur Mantelfläche 21 hin auf.

In Richtung auf die Mantelfläche 21 und bis zu dieser geht die zweite Zentralfläche 231 in eine konvexe zweite Fläche 234 über, die eine zweite Scheitellinie 235 aufweist und die im Bereich der Scheitellinie 235 als eine zweite ebene Ringfläche 236 ausgebildet ist. Die erste und die zweite Zentralfläche 221, 231 sind über einen Verbindungskanal 239 miteinander verbunden.

Eine erste keramische Membran 6 liegt auf der Ringfläche 226 des Grundkörpers 2 auf und bildet mit jenem Teil der konvexen Fläche 224, der sich zwischen der Ringfläche 226 und der Mantelfläche 21 erstreckt, eine erste umlaufende Keilzone 92. Mittels eines Aktivhartlots 10 in der Keilzone 92 ist die Membran 6 so mit dem Grundkörper 2 gefügt, daß eine erste hochvakuum-dichte Meßkammer M1 entstanden ist.

Auf einer dem Grundkörper 2 zugewandten ebenen ersten Innenfläche 61 der Membran 6 ist eine dritte Elektrode 62 angebracht, die über die erste Keilzone 92 kontaktiert ist und mit der Elektrode 222 des Grundkörpers 2 einen ersten Kondensator bildet.

Eine zweite keramische Membran 7 liegt auf der Ringfläche 236 des Grundkörpers 2 auf und bildet mit jenem Teil der konvexen Fläche 234, der sich zwischen der Ringfläche 236 und der Mantelfläche 21 erstreckt, eine zweite umlaufende Keilzone 93. Mittels des Aktivhartlots 10 in der Keilzone 93 ist die Membran so mit dem Grundkörper 2 gefügt, daß eine zweite hochvakuum-dichte Meßkammer M2 entstanden ist.

Auf einer dem Grundkörper zugewandten ebenen Innenfläche 71 der Membran 7 ist eine vierte Elektrode 72 angebracht, die über die zweite Keilzone 93 kontaktiert ist und mit der Elektrode 232 einen zweiten Meßkondensator bildet.

In Fig. 5 ist eine kapazitive Differenzdruckmeßzelle nach einer dritten Variante der Erfindung im Vertikalschnitt dargestellt. Diese Differenzdruckmeßzelle umfaßt einen ersten keramischen Grundkörper 3, der eine erste Mantelfläche 31 und an einer ersten Oberfläche 32 eine konkave erste Zentralfläche 321 hat. Diese ist mit einer ersten Elektrode 322 versehen und weist eine erste elektrische Durchkontaktierung 323 zu einer der Oberfläche 32 gegenüberliegenden zweiten Oberfläche 33 hin auf. Die Zentralfläche 321 geht in Richtung auf die Mantelfläche 31 und bis zu dieser in eine konvexe erste Fläche 324 über, die eine erste Scheitellinie 325 aufweist und die im Bereich der Scheitellinie 325 als eine erste ebene Ringfläche 326 ausgebildet ist.

Ferner umfaßt die Differenzdruckmeßzelle einen zweiten keramischen Grundkörper 4, der eine zweite Mantelfläche 41 und an einer ersten Oberfläche 42 eine konkave zweite Zentralfläche 421 hat. Diese ist mit einer zweiten Elektrode 422 versehen und weist eine zweite elektrische Durchkontaktierung 423 zu einer der Oberfläche 42 gegenüberliegenden zweiten Oberfläche 43 hin auf. In Richtung auf die Mantelfläche 41 und bis zu dieser geht die Zentralfläche 421 in eine konvexe zweite Fläche 424 über, die eine zweite Scheitellinie 425 aufweist. Im Bereich der zweiten Scheitellinie 425 ist die konvexe Fläche 424 als eine zweite ebene Ringfläche 426 ausgebildet.

Eine keramische Membran 8 liegt auf der Ringfläche 326 des ersten Grundkörpers 3 mit einer ersten ebenen Innenflache 81 auf und bildet mit jenem Teil der konvexen Fläche 324, der sich zwischen der Ringfläche 326 und der Mantelfläche 31 des ersten Grundkörpers 3 erstreckt, eine erste umlaufende Keilzone 95. Mittels eines Aktivhartlots 10 in der Keilzone 95 ist die Membran so mit dem Grundkörper 3 gefügt, daß eine erste hochvakuum-dichte Meßkammer M1' entstanden ist.

Die Membran 8 liegt auf der Ringfläche 426 des zweiten Grundkörpers 4 mit einer zweiten ebenen Innenfläche 85 auf und bildet mit jenem Teil der konvexen Fläche 423, der sich zwischen der Ringfläche 426 und der Mantelfläche 41 erstreckt, eine zweite umlaufende Keilzone 96. Mittels eines Aktivhartlots 10 in der Keilzone 96 ist die Membran 8 so mit dem Grundkörper 4 gefügt, daß eine zweite hochvakuum-dichte Meßkammer M2' entstanden ist.

Auf der Innenfläche 81 der Membran 8 ist eine dritte Elektrode 82 angebracht, die über die Keilzone 95 kontaktiert ist, und auf der Innenfläche 85 der Membran 8 ist eine vierte Elektrode 86 angebracht, die über die Keilzone 96 kontaktiert ist. Die erste Elektrode 322 auf dem Grundkörper 3 und die dritte Elektrode 82 bilden einen ersten Meßkondensator und die zweite Elektrode 422 auf dem Grundkörper 4 und die vierte Elektrode 86 bilden einen zweiten Meßkondensator.

Alle erwähnten und in den Fig. 1 bis 5 dargestellten Grundkörper 1; 2; 3 und 4 und Membranen 5, 6, 7 und 8 bestehen vorzugsweise aus einer Aluminiumoxid-Keramik, insbesondere aus einer 96%igen Aluminiumoxid-Keramik. In allen Fällen hat sich ein Aktivhartlot 10 aus einer Zr/Fe/Ti/Be-Legierung (vgl. die EP-A 835 716) oder aus einer Zr/Ni/Ti-Legierung (vgl. die US-A 53 34 344) als besonders vorteilhaft erwiesen, da ein solches Aktivhartlot über eine hervorragende Benetzungsfähigkeit, hohe Festigkeit und einen dem keramischen Material von Membran 5 und Grundkörper 1 entsprechenden thermischen Ausdehnungskoeffizienten verfügt. Als Material für die Elektroden kann Tantal dienen (vgl. die US-A 50 50 034).

Um sicherzustellen, daß keinerlei Aktivhartlotpaste in den Bereich der Druckmeßkammern M, M1, M2, M1' und M2' eindringt hat es sich vorteilhaft erwiesen, die auf der Membran 5 angebrachte Elektrode 52, die auf der Membran 6 angebrachte Elektrode 62, die auf der Membran 7 angebrachte Elektrode 72 und die auf der Membran 8 angebrachten Elektroden 82, 86 in ihrem jeweiligen Randbereich mit einem Lötstop-Überzug zu versehen. Wenn für die Elektroden 52, 62, 72, 82, 86 Tantal verwendet wird, ist ein solcher Lötstop-Überzug in besonders einfacher Weise durch eine Tantaloxid-Schicht zu realisieren.

Die Durchkontaktierungen können z. B. so hergestellt werden, wie es in der US-A 51 54 697 oder der US-A 50 50 035 beschrieben ist.

Die Druckmeßzelle nach Fig. 2 wird wie folgt hergestellt. Der keramische Grundkörper 1 wird an seiner ersten Oberfläche 12 mit der konkaven Zentralfläche 121 versehen, die derart geformt ist, daß sie in Richtung auf die Mantelfläche 12 und bis zu dieser in die konvexe Fläche 124 übergeht. Diese wird im Bereich ihrer Scheitellinie 125 abgeflacht, so daß die ebene Ringfläche 126 entsteht. Dies wird durch entsprechendes Schleifen des Grundkörpers 1 erreicht.

Auf die Zentralfläche 121 wird die Elektrode 122 aufgebracht und zur zweiten Oberfläche 13 des Grundkörpers 1 hin in üblicher Weise durchkontaktiert.

Die keramische Membran 5 wird auf einer ebenen Innenfläche 51 mit der zweiten Elektrode 52 versehen, die derart dimensioniert wird, daß sie nach einem späteren Auflegen der Membran 5 auf die Ringfläche 126 des Grundkörpers 1 bis zu dieser, aber nicht weiter reicht.

Auf die zwischen der Ringfläche 126 und der Mantelfläche 11 liegenden Teile der konvexen Fläche 124 wird eine ausreichende Menge Aktivhartlot 10 aufgebracht. Vorzugsweise wird dazu eine Aktivhartlotpaste verwendet, die mittels eines geeigneten Dispensers in der gewunschten Weise auf den Grundkörper 1 aufgebracht wird.

Danach wird die mit der zweiten Elektrode 52 versehene Innenfläche 51 der Membran 5 auf die Ringfläche 126 des Grundkörpers 1 aufgelegt, und Grundkörper 1 sowie Membran 5 werden unter Vakuum- oder Schutzgasatmosphäre bis zum Schmelzen des Aktivhartlots 10 erhitzt. Nach dem Erkalten liegt die in Fig. 2 dargestellte und oben bereits erläuterte Druckmeßzelle vor.

Die Differenzdruckzelle nach Fig. 4 wird wie folgt hergestellt. Der keramische Grundkörper 2 wird an seiner ersten Oberfläche 22 mit der konkaven Zentralfläche 221 versehen, die in Richtung auf die Mantelfläche 21 und bis zu dieser in die konvexe, die Scheitellinie 225 aufweisende Fläche 224 übergeht. Im Bereich der Scheitellinie 225 wird die konvexe Fläche 224 zur ebenen Ringfläche 226 geformt.

Auf die Zentralfläche 221 wird die Elektrode 222 aufgebracht und zur Mantelfläche 21 des Grundkörpers 2 hin durchkontaktiert.

Ferner wird der Grundkörper 2 an seiner zweiten Oberfläche 23 mit der konkaven Zentralfläche 231 versehen, die in Richtung auf die Mantelfläche 21 des Grundkörpers 2 und bis zu dieser in die konvexe, die Scheitellinie 235 aufweisende Fläche 234 übergeht. Auch die konvexe Fläche 234 wird im Bereich ihrer Scheitellinie 235 abgeflacht und zur ebener. Ringfläche 236 geformt. Auf die Zentralfläche 231 wird die Elektrode 232 aufgebracht und zur Mantelfläche 21 des Grundkörpers 2 hin durchkontaktiert.

Die Membran 6 wird auf ihrer ebenen Innenfläche 61 mit der Elektrode 62 versehen, die derart dimensioniert wird, daß sie nach einem späteren Auflegen der Membran 6 auf die Ringfläche 226 bis zu dieser und nur bis dahin reicht. Die Membran 7 wird ihrerseits auf der ebenen Innenfläche 71 mit der Elektrode 72 versehen, die derart dimensioniert wird, daß sie nach einem späteren Auflegen der Membran 7 auf die Ringfläche 236 bis zu dieser reicht.

Anschließend wird jeweils auf die Teile der konvexen Fläche 224 bzw. 234 des Grundkörpers 2, die zwischen der Ringfläche 226 bzw. 236 und der Mantelfläche 21 liegen, eine zum Hartverlöten von Membran 6 bzw. 7 mit dem Grundkörper 2 ausreichende Menge Aktivhartlot 10 aufgebracht. Auch hierzu wird vorzugsweise eine Aktivhartlotpaste verwendet, die in entsprechender Weise mittels eines Dispensers aufgebracht wird.

Anschließend werden die auf ihrer Innenfläche 61 mit der Elektrode 62 versehene Membran 6 auf die Ringfläche 226 des Grundkörpers 2 und die auf ihrer Innenfläche 71 mit der Elektrode 72 versehene Membran 7 auf die Ringfläche 236 aufgelegt.

Danach werden Grundkörper 2 und Membranen 6, 7 unter Vakuum- oder Schutzgasatmosphäre bis zum Schmelzen des Aktivhartlots 10 erhitzt und danach erkalten gelassen.

Die Differenzdruckzelle nach Fig. 5 wird wie folgt hergestellt. Der keramische Grundkörper 3 wird an seiner Oberfläche 32 mit der konkaven Zentralfläche 321 versehen, die in Richtung auf die Mantelfläche 31 des Grundkörpers 3 und bis zu dieser in die konvexe Fläche 324 übergeht. Im Bereich ihrer Scheitellinie 325 wird die konvexe Fläche 324 als ebene Ringfläche 326 ausgebildet. Auf die Zentralfläche 321 wird die Elektrode 322 aufgebracht und zur Oberfläche 33 des Grundkörpers 3 hin durchkontaktiert.

Der Grundkörper 4 wird an seiner Oberfläche 42 mit der konkaven Zentralfläche 421 versehen, die in Richtung auf die Mantelfläche 41 und bis zu dieser in die konvexe Fläche 424 übergeht. Im Bereich ihrer Scheitellinie 425 wird die konvexe Fläche 424 als ebene Ringfläche 426 ausgebildet. Auf die Zentralfläche 421 wird die Elektrode 422 aufgebracht und zur Oberfläche 43 des Grundkörpers 4 hin durchkontaktiert.

Die keramische Membran 8 wird auf ihrer ebenen Innenfläche 81 mit der Elektrode 82 versehen, die derart dimensioniert ist, daß sie nach einem späteren Auflegen der Membran 8 auf die Ringfläche 326 des ersten Grundkörpers 3 bis zu dieser reicht. Auf ihrer anderen ebenen Innenfläche 85 wird die Membran 8 mit der Elektrode 86 versehen, die so dimensioniert wird, daß sie nach einem späteren Auflegen der Membran 8 auf die Ringfläche 426 des Grundkörpers 4 bis zu dieser reicht.

Auf die Teile der konvexen Fläche 324 des Grundkörpers 3, die zwischen der Ringfläche 326 und der Mantelfläche 31 liegen, und auf die Teile der konvexen Fläche 424 des Grundkörpers 4, die zwischen der Ringfläche 426 und der Mantelfläche 41 liegen, wird jeweils eine zum Hartverloten der Membran 8 mit Grundkörper 3 bzw. 4 ausreichende Menge Aktivhartlot 10 aufgebracht. Vorzugsweise wird auch hierbei eine Aktivhartlotpaste verwendet, die mittels eines geeigneten Dispensers aufgebracht wird.

Anschließend wird die mit der Elektrode 82 versehene Innenfläche 81 der Membran 8 auf die Ringfläche 326 des Grundkörpers 3 und die mit der Elektrode 86 versehene Innenfläche 85 der Membran 8 auf die Ringfläche 426 des Grundkörpers 4 aufgelegt.

Danach werden die Grundkörper 3, 4 und Membran 8 unter Vakuum- oder Schutzgasatmosphäre bis zum Schmelzen des Aktivhartlots 10 erhitzt und erkalten gelassen.

## Patentansprüche

1. Kapazitive Druckmeßzelle
- mit einem keramischen Grundkörper (1), der
-- eine Mantelfläche (11) und
-- an einer ersten Oberfläche (12) eine konkave Zentralfläche (121) hat, die
--- mit einer ersten Elektrode (122) versehen ist,
--- eine elektrische Durchkontaktierung (123) der ersten Elektrode (122) zu einer zweiten Oberfläche (13) hin aufweist und
--- in Richtung auf die Mantelfläche (11) und bis zu dieser in eine konvexe, eine Scheitellinie (125) aufweisende Fläche (124) übergeht,
---- die im Bereich der Scheitellinie (125) als ebene Ringfläche (126) ausgebildet ist,
- mit einer keramischen Membran (5),
-- die auf der Ringfläche (126) des Grundkörpers (1) aufliegt und
-- die auf der Ringfläche (126) und zwischen Mantelfläche (11) und Ringfläche (126) unter Bildung einer umlaufenden Keilzone (91) mittels eines Aktivhartlots (10) mit dem Grundkörper (1) zur Schaffung einer hochvakuum-dienten Meßkammer (M) gefügt ist,
-- wobei auf einer dem Grundkörper (1) zugewandten ebenen Innenfläche (51) der Membran (5) eine zweite Elektrode (52) angebracht ist,
--- die über die Keilzone (91) kontaktiert ist.

2. Kapazitive Differenzdruckmeßzelle
- mit einem keramischen Grundkörper (2), der
-- eine Mantelfläche (21) und
-- an einer ersten Oberfläche (22) eine konkave erste Zentralfläche (221) hat, die
--- mit einer ersten Elektrode (222) versehen ist,
--- eine erste elektrische Durchkontaktierung (223) der ersten Elektrode (222) zur Mantelfläche (21) hin aufweist und
--- in Richtung auf die Mantelfläche (21) und bis zu dieser in eine konvexe, eine erste Scheitellinie (225) aufweisende erste Fläche (224) übergeht,
---- die im Bereich der ersten Scheitellinie (225) als eine erste ebene Ringfläche (226) ausgebildet ist,
-- welcher Grundkorper (2) ferner an einer der ersten Oberfläche (22) gegenüberliegenden zweiten Oberfläche (23) eine konkave zweite Zentralfläche (231) hat, die
--- mit einer zweiten Elektrode (232) versehen ist,
--- eine zweite elektrische Durchkontaktierung (2339) der zweiten Elektrode (232) zur Mantelfläche (21) hin aufweist und
--- in Richtung auf die Mantelfläche (21) und bis zu dieser in eine konvexe, eine zweite Scheitellinie (235) aufweisende zweite Fläche (234) übergeht,
---- die im Bereich der zweiten Scheitellinie (235) als eine zweite ebene Ringfläche (236) ausgebildet ist, und
-- mit einem Verbindungskanal (239) zwischen der ersten und der zweiten Zentralfläche (221, 231) versehen ist,
- mit einer ersten keramischen Membran (6),
-- die auf der ersten Ringfläche (226) des Grundkörpers (2) aufliegt und
-- die auf der ersten Ringfläche (226) und zwischen Mantelfläche (21) und erster Ringfläche (226) unter Bildung einer ersten umlaufenden Keilzone (92) mittels eines Aktivhartlots (10) mit dem Grundkörper (2) zur Schaffung einer ersten hochvakuum-dichten Meßkammer (M1) gefügt ist, und
-- wobei auf einer dem Grundkörper (2) zugewandten ebener. Innenfläche (61) der ersten Membran (6) eine dritte Elektrode (62) angebracht ist,
--- die über die erste Keilzone (92) kontaktiert ist,
- mit einer zweiten keramischen Membran (7),
-- die auf der zweiten Ringfläche (236) des Grundkörpers (2) aufliegt und
-- die auf der zweiten Ringfläche (236) und zwischen Mantelfläche (21) und zweiter Ringfläche (236) unter Bildung einer zweiten umlaufenden Keilzone (93) mittels eines Aktivhartlots (10) mit dem Grundkörper (2) zur Schaffung einer zweiten hochvakuum-dichten Meßkammer (M2) gefügt ist,
-- wobei auf einer dem Grundkörper (2) zugewandten zweiten ebenen Innenfläche (71) der zweiten Membran (7) eine vierte Elektrode (72) angebracht ist,
--- die über die zweite Keilzone (93) kontaktiert ist.

3. Kapazitive Differenzdruckmeßzelle
- mit einem ersten keramischen Grundkörper (3), der
-- eine erste Mantelfläche (31) und
-- an einer ersten Oberfläche (32) eine konkave erste Zentralfläche (321) hat, die
--- mit einer ersten Elektrode (322) versehen ist,
--- eine erste elektrische Durchkontaktierung (323) für die erste Elektrode (322) zu einer der ersten Oberfläche (32) gegenüberliegenden zweiten Oberfläche (33) hin aufweist und
--- in Richtung auf die erste Mantelfläche (31) und bis zu dieser in eine konvexe, eine erste Scheitellinie (325) aufweisende erste Fläche (324) übergeht,
---- die im Bereich der ersten Scheitellinie (325) als eine erste ebene Ringfläche (326) ausgebildet ist,
- mit einem zweiten keramischen Grundkörper (4), der
-- eine zweite Mantelfläche (41) und
-- an einer ersten Oberfläche (42) eine konkave zweite Zentralfläche (421) hat, die
--- mit einer zweiten Elektrode (422) versehen ist,
--- eine zweite elektrische Durchkontaktierung (423) für die zweite Elektrode (422) zu einer der ersten Oberfläche (42) gegenüberliegenden zweiten Oberfläche (43) hin aufweist und
--- in Richtung auf die zweite Mantelfläche (41) und bis zu dieser in eine konvexe, eine zweite Scheitellinie (425) aufweisende zweite Fläche (424) übergeht,
---- die im Bereich der zweiten Scheitellinie (425) als eine zweite ebene Ringfläche (426) ausgebildet ist, und
- mit einer keramischen Membran (8), die
-- auf der ersten Ringfläche (326) des ersten Grundkörpers (3) mit einer ersten Innenfläche (81) aufliegt,
-- auf der ersten Ringfläche (326) und zwischen erster Mantelfläche (31) und erster Ringfläche (326) des ersten Grundkörpers (3) unter Bildung einer ersten umlaufenden Keilzone (95) mittels eines Aktivhartlots (10) mit dem ersten Grundkörper (3) zur Schaffung einer ersten hochvakuum-dichten Meßkammer (M1') gefügt ist,
-- auf der zweiten Ringfläche (426) des zweiten Grundkörpers (4) mit einer zweiten Innenfläche (85) aufliegt und
-- auf der zweiten Ringfläche (426) und zwischen zweiter Mantelfläche (41) und zweiter Ringfläche (426) des zweiten Grundkörpers (4) unter Bildung einer zweiten umlaufenden Keilzone (96) mittels eines Aktivhartlots (10) mit dem zweiten Grundkörper (4) zur Schaffung einer zweiten hochvakuum-dichten Meßkammer (M2') gefügt ist,
-- wobei auf der ersten Innenfläche (81) der Membran (8) eine dritte Elektrode (82) angebracht ist,
--- die über die erste Keilzone (95) kontaktiert ist, und
-- wooei auf der zweiten Innenfläche (85) eine vierte Elektrode (86) angebracht ist,
--- die über die zweite Keilzone (96) kontaktiert ist.

4. Druckmeßzelle bzw. Differenzdruckmeßzelle nach einem der Ansprüche 1 bis 3, bei der der Grundkörper (1; 2) bzw. die Grundkörper(3, 4) und die Membran (5; 8) bzw. die Membranen (6, 7) aus einer Aluminiumoxid-Keramik und das Aktivhartlot (10) aus einer Zr/Fe/Ti/Be-Legierung oder aus einer Zr/Ni/Ti-Legierung bestehen.

5. Druckmeßzelle bzw. Differenzdruckmeßzelle nach einem der Ansprüche 1 bis 3, bei der mindestens die Elektrode (52; 82, 86) der Membran (5; 8) bzw. der Membranen (6, 7) wenigstens in einem jeweiligen Randbereich mit einem Lötstop-Überzug bedeckt sind.

6. Verfahren zur Herstellung einer kapazitiven Druckmeßzelle mit folgenden Schritten:
- Ein keramischer Grundkörper (1) wird an einer ersten Oberfläche (12) mit einer konkaven Zentralfläche (121) versehen,
-- die in Richtung auf eine Mantelfläche (12) des Grundkörpers (1) und bis zu dieser in eine konvexe, eine Scheitellinie (125) aufweisende Fläche (124) übergeht,
--- die im Bereich der Scheitellinie (125) als eine ebene Ringfläche (126) ausgebildet wird,
- auf die Zentralfläche (121) wird eine erste Elektrode (122) aufgebracht und zu einer der ersten Oberfläche (12) gegenüberliegenden zweiten Oberfläche (13) des Grundkörpers (1) hin durchkontaktiert,
- eine mit der ersten Oberfläche (12) des Grundkorpers (1) deckungsgleiche keramische Membran (5) wird auf einer ebenen Innenfläche (51) mit einer derart dimensionierten zweiten Elektrode (52) versehen, daß sie nach einem späteren Auflegen der Membran (5) auf die Ringfläche (126) des Grundkörpers (1) bis zu dieser reicht,
- auf zwischen der Ringfläche (126) und der Mantelfläche (11) liegende Teile der konvexen Fläche (124) wird eine zum Hartverlöten von Membran (5) und Grundkörper (1) ausreichende Menge Aktivhartlot (10) aufgebracht,
- die mit der zweiten Elektrode (52) versehene Innenfläche (51) der Membran (5) wird auf die Ringfläche (126) des Grundkörpers (1) aufgelegt, und
- Grundkörper (1) und Membran (5) werden unter Vakuum- oder Schutzgasatmosphäre bis zum Schmelzen des Aktivhartlots (10) erhitzt und danach erkalten gelassen.

7. Verfahren zur Herstellung einer kapazitiven Differenzdruckmeßzelle mit folgenden Schritten:
- Ein keramischer Grundkörper (2) wird an einer ersten Oberfläche (22) mit einer konkaven ersten Zentralfläche (221) versehen,
-- die in Richtung auf eine Mantelfläche (21) und bis zu dieser in eine konvexe, eine erste Scheitellinie (225) aufweisende erste Fläche (224) übergeht,
--- die im Bereich der ersten Scheitellinie (225) als eine erste ebene Ringfläche (226) ausgebildet wird,
- auf die erste Zentralfläche (221) wird eine erste Elektrode (222) aufgebracht und zur Mantelfläche (21) des Grundkörpers (2) hin durchkontaktiert,
- der Grundkörper (2) wird ferner an einer der ersten Oberfläche (22) gegenüberliegenden zweiten Oberfläche (23) mit einer konkaven zweiten Zentralfläche (231) versehen,
-- die in Richtung auf die Mantelfläche (21) des Grundkörpers (2) und bis zu dieser in eine konvexe, eine zweite Scheitellinie (235) aufweisende zweite Fläche (234) ubergeht,
--- die im Bereich der zweiten Scheitellinie (235) als eine zweite ebene Ringfläche (236) ausgebildet wird,
- auf die zweite Zentralfläche (231) wird eine zweite Elektrode (232) aufgebracht und zur Mantelfläche (21) des Grundkörpers (2) hin durchkontaktiert,
- eine mit der ersten Oberfläche (22) des Grundkörpers (2) deckungsgleiche erste keramische Membran (6) wird auf einer ebenen Innenfläche (61) mit einer derart dimensionierten dritten Elektrode (62) versehen,
-- daß diese nach einem späteren Auflegen der ersten Membran (6) auf die erste Ringfläche (226) des Grundkörpers (2) bis zu dieser reicht,
- eine mit der zweiten Oberfläche (23) des Grundkörpers (2) deckungsgleiche zweite keramische Membran (7)wird auf einer ebenen Innenfläche (71) mit einer derart dimensionierten vierten Elektrode (72) versehen,
-- daß diese nach einem späteren Auflegen der zweiten Membran (7) auf die zweite Ringfläche (236) des Grundkörpers (2) bis zu dieser reicht,
- auf zwischen der ersten Ringfläche (226) und der Mantelfläche (21) liegende Teile der konvexen ersten Fläche (224) des Grundkorpers (2) und auf zwischen der zweiten Ringfläche (236) und der Mantelfläche (21) liegende Teile der konvexen zweiten Fläche (234) des Grundkörpers (2) wird jeweils eine zum Hartverlöten von erster bzw. zweiter Membran (6 bzw. 7) mit dem Grundkörper (2) ausreichende Menge Aktivhartlot (10) aufgebracht,
- die mit der dritten Elektrode (62) versehene Innenfläche (61) der ersten Membran (6) wird auf die erste Ringfläche (226) des Grundkörpers (2) aufgelegt,
- die mit der vierten Elektrode (72) versehene Innenfläche (71) der zweiten Membran (7) wird auf die zweite Ringfläche (236) des Grundkörpers (2) aufgelegt, und
- Grundkörper (2) und Membranen (6, 7) werden unter Vakuum- oder Schutzgasatmosphäre bis zum Schmelzen des Aktivhartlots (10) erhitzt und danach erkalten gelassen.

8. Verfahren zur Herstellung einer kapazitiven Differenzdruckmeßzelle mit folgenden Schritten:
- Ein erster keramischer Grundkörper (3) wird an einer ersten Oberfläche (32) mit einer konkaven ersten Zentralfläche (321) versehen,
-- die in Richtung auf eine erste Mantelfläche (31) des ersten Grundkörpers (3) und bis zu dieser in eine konvexe, eine erste Scheitellinie (325) aufweisende erste Fläche (324) übergeht,
--- die im Bereich der ersten Scheitellinie (325) als eine erste ebene Ringfläche (326) ausgebildet wird,
- auf die erste Zentralfläche (321) wird eine erste Elektrode (322) aufgebracht und zu einer der ersten Oberfläche (31) gegenüberliegenden zweiten Oberfläche (33) des ersten Grundkörpers (3) hin durchkontaktiert,
- ein zweiter keramischer Grundkörper (4) wird an einer ersten Oberfläche (42) mit einer konkaven zweiten Zentralfläche (421) versehen,
-- die in Richtung auf eine zweite Mantelfläche (41) des zweiten Grundkörpers (4) und bis zu dieser in eine konvexe, eine zweite Scheitellinie (425) aufweisende zweite Fläche (4424) übergeht,
--- die im Bereich der zweiten Scheitellinie (425) als eine zweite ebene Ringfläche (426) ausgebildet wird,
- auf die zweite Zentralfläche (421) wird eine zweite Elektrode (422) aufgebracht und zu einer der ersten Oberfläche (42) gegenüberliegenden zweiten Oberfläche (43) des zweiten Grundkörpers (4) hin durchkontaktiert,
- eine mit der ersten Oberfläche (32) des ersten Grundkörpers (3) deckungsgleiche, keramische Membran (8) wird auf einer ebenen ersten Innenfläche (81) mit einer derart dimensionierten dritten Elektrode (82) versehen,
-- daß diese nach einem späteren Auflegen der Membran (8) auf die erste Ringfläche (326) des ersten Grundkörpers (3) bis zu dieser reicht,
- eine der ersten Innenfläche (81) gegenüberliegende ebene zweite Innenfläche (85) der Membran (8) wird mit einer derart dimensionierten vierten Elektrode (86) versehen,
-- daß diese nach einem späteren Auflegen der Membran (8) auf die zweite Ringfläche (426) des zweiten Grundkörpers (4) bis zu dieser reicht,
- auf zwischen der ersten Ringfläche (326) und der ersten Mantelfläche (31) liegende Teile der konvexen ersten Fläche (324) des ersten Grundkörpers (3) und auf zwischen der zweiten Ringfläche (426) und der zweiten Mantelfläche (41) liegende Teile der konvexen zweiten Fläche (424) des zweiten Grundkörpers (4) wird jeweils eine zum Hartverlöten der Membran (8) mit dem ersten bzw. dem zweiten Grundkörper (3 bzw. 4) ausreichende Menge Aktivhartlot (10) aufgebracht,
- die mit der dritten Elektrode (82) versehene erste Innenfläche (81) der Membran (8) wird auf die erste Ringfläche (326) des ersten Grundkörpers (3) aufgelegt,
- die mit der vierten Elektrode (86) versehene zweite Innenfläche (85) der Membran (8) wird auf die zweite Ringfläche (426) des zweiten Grundkörpers (4) aufgelegt, und
- Grundkörper (3, 4) und Membran (8) werden unter Vakuum- oder Schutzgasatmosphäre bis zum Schmelzen des Aktivhartlots (10) erhitzt und danach erkalten gelassen.

9. Verfahren nach einem der Ansprüche 6 bis 8, bei dem mindestens die Elektrode (52; 82, 86) der Membran (5; 8) bzw. der Membranen (6, 7) wenigstens in einem jeweiligen Randbereich mit einem Lotstop-Überzug bedeckt werden.

## Claims

1. A capacitive pressure sensor cell comprising:
- a ceramic substrate (1) having
-- a cylindrical surface (11) and,
-- at a first major surface (12), a concave central area (121)
--- which is provided with a first electrode (122),
--- has an electrical connection (123) from the first electrode (122) through the substrate to a second major surface (13), and,
--- in the direction of and up to the cylindrical surface (11), merges into a convex surface (124) having a vertex line (125),
---- said convex surface forming a planar ring surface (126) in the area of the vertex line (125); and
- a ceramic diaphragm (5)
-- which rests on the ring surface (126) of the substrate (1), and
-- which is joined to the substrate (1) on the ring surface (126) and between the cylindrical surface (11) and the ring surface (126) by means of an active brazing solder (10), forming a circumferential wedge zone (91), to form a high-vacuumùtight sensing chamber (M),
-- with a second electrode (52) being provided on a planar inner surface (51) of the diaphragm (5) facing the substrate (1),
--- to which second electrode (52) contact is made through the wedge zone (91).

2. A capacitive differential pressure sensor cell comprising:
- a ceramic substrate (2) having
-- a cylindrical surface (21) and,
-- at a first major surface (22), a concave first central area (221) which
--- is provided with a first electrode (222),
--- has a first electrical connection (223) from the first electrode (222) through the substrate (2) to the cylindrical surface (21), and,
--- in the direction of and up to the cylindrical surface (21), merges into a convex first surface (224) having a first vertex line (225),
---- said convex first surface forming a first planar ring surface (226) in the area of the first vertex line (225),
-- which substrate (2) further has, at a second major surface (23) opposite the first major surface (22), a concave second central (231) area which
--- is provided with a second electrode (232),
--- has a second electrical connection (233) from the second electrode (232) through the substrate to the cylindrical surface (21), and,
--- in the direction of and up to the cylindrical surface (21), merges into a convex second surface (234) having a second vertex line (235),
---- said convex second surface forming a second planar ring surface (236) in the area of the second vertex line (235),
-- said substrate further having a connecting channel (239) between the first central area (221) and the second central area (231);
- a first ceramic diaphragm (6)
-- which rests on the first ring surface (226) of the substrate (2), and
-- which is joined to the substrate (2) on the first ring surface (226) and between the cylindrical surface (21) and the first ring surface (226) by means of active brazing solder (10) forming a first circumferential wedge zone (92), to form a first high-vacuum-tight sensing chamber (M1),
-- with a third electrode (62) being provided on a planar inner surface (61) of the first diaphragm (6) facing the substrate (2),
--- to which third electrode (62) contact is made through the first wedge zone (92); and
- a second ceramic diaphragm (7)
-- which rests on the second ring surface (236) of the substrate (2), and
-- which is joined to the substrate (2) on the second ring surface (236) and between the cylindrical surface (21) and the second ring surface (236) by means of active brazing solder (10) forming a second circumferential wedge zone (93), to form a second high-vacuum-tight sensing chamber (M2),
-- with a fourth electrode (72) being provided on a planar inner surface (71) of the second diaphragm (7) facing the substrate (2),
--- to which fourth electrode contact is made through the second wedge zone (93).

3. A capacitive differential pressure sensor cell comprising:
- a first ceramic substrate (3) having
-- a first cylindrical surface (31) and,
-- at a first major surface (32), a concave first central area (321) which
--- is provided with a first electrode (322),
--- has an electrical connection (323) from the first electrode (322) through the first ceramic substrate to a second major surface (33) opposite the first major surface (32), and,
--- in the direction of and up to the cylindrical surface (31), merges into a convex first surface (324) having a first vertex line (325),
---- said convex first surface forming a first planar ring surface (326) in the area of the first vertex line (325);
- a second ceramic substrate (4) having
-- second cylindrical surface (41) and,
-- at a first major surface (42), a concave second central area (421) which
--- is provided with a second electrode (422),
--- has a second electrical connection (423) from the second electrode (422) through the second ceramic substrate to a second major surface (43) opposite the first major surface (42), and,
--- in the direction of and up to the second cylindrical surface (41), merges into a convex second surface (424) having a second vertex line (425),
---- said convex second surface forming a second planar ring surface (426) in the area of the second vertex line (425); and
- a ceramic substrate (8) which
-- rests with a first surface (81) on the first ring surface (326) of the first substrate (3),
-- is joined to the first substrate (3) on the first ring surface (326) and between the first cylindrical surface (31) and the first ring surface (326) of the first substrate (3) by means of active brazing solder (10) forming a first circumferential wedge zone (95), to form a first high-vacuum-tight sensing chamber (M1'),
-- rests with a second surface (85) on the second ring surface (426) of the second substrate (4),
-- is joined to the second substrate (4) on the second ring surface (426) and between the second cylindrical surface (41) and the second ring surface (426) of the second substrate (4) by means of active brazing solder (10) forming a second circumferential wedge zone (96), to form a second high-vacuum-tight sensing chamber (M2'),
-- the first surface (81) of the diaphragm (8) being provided with a third electrode (82)
--- to which contact is made through the first wedge zone (95), and
-- the second surface (85) being provided with a fourth electrode (86)
--- to which contact is made through the second wedge zone (96).

4. The pressure sensor cell or the differential pressure sensor cell as claimed in anyone of claims 1 to 3 wherein the substrate (1; 2) or the substrates (3, 4) and the diaphragm (5; 8) or the diaphragms (6, 7) are made of alumina ceramic, and the active brazing solder (10) is a Zr-Fe-Ti-Be alloy or a Zr-Ni-Ti alloy.

5. The pressure sensor cell or the differential pressure sensor cell as claimed in anyone of claims 1 to 3 wherein at least the electrode (52; 82, 86) of the diaphragm (5; 8) or the diaphragms (6, 7 ) is covered, at least in a respective edge region, with a solder resist layer.

6. A process for manufacturing a capacitive ressure sensor cell comprising the steps of:
- providing a ceramic substrate (1), at a first major surface (12) thereof, with a concave central area (121)
-- which, in the direction of and up to a cylindrical surface (11) of the substrate (1), merges into a convex surface (124) having a vertex line (125),
--- said convex surface being formed as a planar ring surface (126) in the area of the vertex line (125);
- depositing a first electrode (122) on the central area (121) and providing an electrical connection from the first electrode (122) through the substrate to a second major surface (13) of the substrate (1) opposite the first major surface (12);
- providing a ceramic diaphragm (5) congruent with the first major surface (12) of the substrate (1), on a planar inner surface (51) thereof, with a second electrode (52) dimensioned so that, after the diaphragm (5) has been placed on the ring surface (126) of the substrate (1), the second electrode extends up to said ring surface;
- applying a quantity of active brazing solder (10) sufficient to braze the diaphragm (5) to the substrate (1) to portions of the convex surface (124) located between the ring surface (126) and the cylindrical surface (11);
- placing the inner surface (51) of the diaphragm (5) provided with the second electrode (52) on the ring surface (126) of the substrate (1); and
- heating the substrate (1) and the diaphragm (5) in a vacuum or inert-gas atmosphere until the active brazing solder (10) has melted, and then allowing them to cool down.

7. A process for manufacturing a capacitve differential pressure sensor cell comprising the steps of:
- providing a ceramic substrate (2), at a first major surface (22) thereof, with a concave first central area (221)
-- which, in the direction of and up to a cylindrical surface (21), merges into a convex first surface (224) having a first vertex line (225),
--- said convex first surface being formed as a first planar ring surface (226) in the area of the first vertex line (225);
- depositing a first electrode (222) on the first central area (221) and providing a electrical connection from the first electrode through the substrate to the cylind-rical surface (21) of the substrate (2);
- providing the substrate (2), at a second major surface (23) opposite the first major surface (22), with a concave second central area (231)
-- which, in the direction of and up to a cylindrical surface (21) of the substrate (2), merges into a convex second surface (234) having a second vertex line (235),
--- said convex second surface being formed as a second planar ring surface (236) in the area of the second vertex line (235);
- depositing a second electrode (232) on the second central area (231) and providing an electrical connection from the second electrode through the substrate to the cylindrical surface (21) of the substrate (2);
- providing a first ceramic diaphragm (6) congruent with the first major surface (22) of the substrate (2), on a planar inner surface (61) thereof, with a third electrode (62) dimensioned so
-- that, after the first diaphragm (6) has been placed on the first ring surface (226) of the substrate (2), the third electrode extends up to said first ring surface;
- providing a second ceramic diaphragm (7) congruent with the second major surface (23) of the substrate (2), on a planar inner surface (71) thereof, with a fourth electrode (72) dimensioned so
-- that, after the second diaphragm (7) has been placed on the second ring surface (236) of the substrate (2), said fourth electrode extends up to said second ring surface;
- applying respective quantities of active brazing solder (10) sufficient to braze the first and second diaphragms (6, 7) to the substrate (2) to portions of the convex first surface (224) of the substrate (2) located between the first ring surface (226) and the cylindrical surface (21) and to portions of the convex second surface (234) of the substrate located between the second ring surface (236) and the cylindrical surface (21);
- placing the inner surface (61) of the first diaphragm (6) provided with the third electrode (62) on the first ring surface (226) of the substrate (2);
- placing the inner surface (71) of the second diaphragm (7) provided with the fourth electrode (72) on the second ring surface (236) of the substrate (2); and
- heating the substrate (2) and the diaphragms (6, 7) in a vacuum or inert-gas atmosphere until the active brazing solder (10) has melted, and then allowing them to cool down.

8. A process for manufacturing a capacitive differential pressure sensor cell comprising the steps of:
- providing a first ceramic substrate (3), at a first major surface (32) thereof, with a concave first central area (321)
-- which, in the direction of and up to a first cylindrical surface (31), merges into a convex first surface (324) having a first vertex line (325),
--- said convex first surface being formed as a first planar ring surface (326) in the area of the first vertex line (325);
- depositing a first electrode (322) on the first central area (321) and providing an electrical connection from the first electrode through the first substrate to a second major surface (33) of the substrate (3) opposite the first major surface (31);
- providing a second ceramic substrate (4), at a first major surface (42) thereof, with a concave second central area (421)
-- which, in the direction of and up to a second cylind-rical surface (41) of the second substrate (4), merges into a convex second surface (424) having a second vertex line (425),
--- said convex second surface being formed as a second planar ring surface (426) in the area of the second vertex line (425);
- depositing a second electrode (422) on the second central area (421) and providing an electrical connection from the second electrode through the second substrate to a second major surface (43) of the second substrate (4) opposite the first major surface (42);
- providing a ceramic diaphragm (8) congruent with the first major surface (32) of the first substrate (3), on a planar first surface (81) thereof, with a third electrode (82) dimensioned so
-- that, after the diaphragm (8) has been placed on the first ring surface (326) of the first substrate (3), said third electrode extends up to said first ring surface;
- providing a planar second surface (85) of the diaphragm (8) opposite the first surface (81) with a fourth electrode (86) dimensioned so
-- that, after the diaphragm (8) has been placed on the second ring surface (426) of the second substrate (4), said fourth electrode extends up to said second ring surface;
- applying respective quantities of active brazing solder (10) sufficient to braze the first and second substrates to the diaphragm to portions of the convex first surface (324) of the first substrate (3) located between the first ring surface (326) and the first cylindrical surface (31) and to portions of the convex second surface (424) of the second substrate (4) located between the second ring surface (426) and the second cylindrical surface (41);
- placing the first surface (81) of the diaphragm (8), provided with the third electrode (82), on the first ring surface (326) of the first substrate (3);
- placing the second surface (85) of the diaphragm (8), provided with the fourth electrode (86), on the second ring surface (426) of the second substrate (4); and
- heating the substrates (3, 4) and the diaphragm (8) in a vacuum or inert-gas atmosphere until the active brazing solder (10) has melted, and then allowing them to cool down.

9. The process as claimed in claim 8 wherein at least the electrode (52; 82, 86) of the diaphragm (5; 8) or of the diaphragms (6, 7) is covered, at least in a respective edge region, with a solder resist layer.

## Revendications

1. Cellules manométriques capacitives, caractérisées en ce qu'elles comportent :
un corps de base céramique (1), qui possède une surface latérale (11) et, sur une première surface (12), une surface centrale concave (121), laquelle est pourvue d'une première électrode (122), possède une connexion transversale électrique (123) de la première électrode (122) à la deuxième surface (13), et dans la direction allant vers la surface latérale (11) et jusqu'à cette dernière se poursuit par une surface convexe (124) comportant une ligne des sommets (125), cette surface convexe étant dans la zone de la ligne des sommets (125) configurée comme une surface annulaire plane (126);
une membrane céramique 5, qui s'appuie sur la surface annulaire (126) du corps de base 1, et qui sur la surface annulaire (126) et entre la surface latérale (11) et la surface annulaire (126) est, avec formation d'une zone périphérique (91) en forme de coin, assemblée à l'aide d'un métal d'apport (10) pour brasage fort actif au corps de base (1) pour créer une chambre de mesure (M) étanche au vide poussé, une deuxième électrode (52), qui est connectée par l'intermédiaire de la zone (91) en forme de coin, étant rapportée à une surface intérieure plane (51) dirigée vers le corps de base (1).

2. Cellule capacitive de mesure de la pression différentielle, caractérisée en ce qu'elle comprend :
un corps de base céramique (2), qui possède une surface latérale (21) et, sur une première surface (22), une première surface concave (221), qui est pourvue d'une première électrode (222), comporte une première connexion transversale électrique (223) de la première électrode (222) à la surface latérale (21), et, dans la direction allant vers la surface latérale (21) et jusqu'à cette dernière, se poursuit par une première surface convexe, comportant une première ligne des sommets (225), première surface convexe qui dans la zone de la première ligne des sommets (225) est configurée comme une première surface annulaire plane (226); le corps de base (2) comportant en outre, sur une deuxième surface (223), opposée à la première surface (22), une deuxième surface centrale concave (231), qui est pourvue d'une deuxième électrode (232), comporte une deuxième connexion transversale électrique (233) de la deuxième électrode (232) à la surface latérale (21), et dans la direction allant vers la surface latérale (21) et jusqu'à cette dernière se poursuit par une deuxième surface convexe (234) comportant une deuxième ligne des sommets (235), deuxième surface convexe qui dans la zone de la deuxième ligne des sommets (235) est configurée comme une deuxième surface annulaire plane (236) et est pourvue d'un canal de liaison (239) entre la première et la deuxième surfaces centrales (221, 231);
une première membrane céramique (6), qui s'appuie sur une première surface annulaire (226) du corps de base (2) et qui, sur la première surface annulaire (226)et entre la surface latérale (21) et la première surface annulaire (226) est, avec formation d'une première zone périphérique (92) en forme de coin, assemblée à l'aide d'un métal d'apport (10) pour brasage fort actif au corps de base (2) pour créer une première chambre de mesure (M1) étanche au vide poussé ; une troisième électrode (62), qui est connectée par l'intermédiaire de la première zone (92) en forme de coin, étant rapportée à une surface intérieure plane (61) dirigée vers le corps de base (2), de la première membrane (6) ;
une deuxième membrane céramique (7), qui s'appuie sur la deuxième surface annulaire (236) du corps de base (2), et qui, sur la deuxième surface annulaire (236) et entre la surface latérale (21) et la deuxième surface annulaire (236), est, avec formation d'une deuxième zone périphérique (93) en forme de coin, assemblée à l'aide d'un métal d'apport (10) pour brasage fort actif au corps de base (2) pour créer une deuxième chambre de mesure (M2) étanche au vide poussé, une quatrième électrode (72), qui est connectée par l'intermédiaire de la deuxième zone (93) en forme de coin, étant rapportée à une deuxième surface intérieure plane (71), dirigée vers le corps de base (2), de la deuxième membrane (7).

3. Cellule de mesure capacitive de la pression différentielle, caractérisée en ce qu'elle comporte :
un première corps de base céramique (3), qui possède une première surface latérale (31) et, contre une première surface (32), une première surface centrale concave (321), qui est pourvue d'une première électrode (322), possède une première connexion transversale électrique (323) pour la première électrode (322), à une deuxième surface (33) opposée à la première surface (32), et, dans la direction allant vers la première surface latérale (31) et jusqu'à cette dernière, se poursuit par une première surface convexe (324) comportant une première ligne de sommets (325), première surface convexe qui dans la zone de la première ligne des sommets (325) est configurée comme une première surface annulaire plane (326) ;
un deuxième corps de base céramique (4), qui possède une deuxième surface latérale (41) et, contre une première surface (42), une deuxième surface centrale concave (421), qui est pourvue d'une deuxième électrode (422), possède une deuxième connexion transversale électrique (423) pour la deuxième électrode (422), à une deuxième surface (43) opposée à la première surface (42), et, dans la direction allant vers la deuxième surface latérale (41) et jusqu'à cette dernière, se poursuit par une deuxième surface convexe (424), comportant une deuxième ligne des sommets (425), deuxième surface convexe qui dans la zone de la deuxième ligne des sommets (425) est configurée comme une deuxième surface annulaire plane (426) ; et
une membrane céramique (8), qui s'appuie sur la première surface annulaire (326) du premier corps de base (3) par une première surface intérieure (81) ; sur la première surface annulaire (326) et entre la première surface latérale (31) et la première surface annulaire (326) du premier corps de base (3), est, avec formation d'une première zone périphérique (95) en forme de coin, assemblée à l'aide d'un métal d'apport (10) pour brasage fort actif au premier corps de base (3) pour créer une première chambre de mesure (M1') étanche au vide poussé; s'appuie sur la deuxième surface annulaire (426) du deuxième corps de base (4) par une deuxième surface intérieure (85); et sur la deuxième surface annulaire (426) et entre la deuxième surface latérale (41) et la deuxième surface annulaire (426) du deuxième corps de base (4) est, avec formation d'une deuxième zone périphérique (96) en forme de coin, assemblée à l'aide d'un métal d'apport (10) pour brasage fort actif au deuxième corps de base (4) pour créer une deuxième chambre de mesure (M2') étanche au vide poussé ; une troisième électrode (82), qui est connectée par l'intermédiaire de la première zone (95) en forme de coin, étant appliquée sur la première surface (81) de la membrane (8); et une quatrième électrode (86), qui est connectée par l'intermédiaire de la deuxième zone (96) en forme de coin, étant appliquée sur la deuxième surface intérieure (85).

4. Cellule manométrique ou cellule de mesure de la pression différentielle selon l'une des revendications 1 à 3, caractérisée en ce que le corps de base : (1 ; 2) ou les corps de base (3, 4) et la membrane (5 ; 8) ou les membranes (6, 7) sont constitués d'une céramique d'oxyde d'aluminium, et le métal d'apport (10) pour brasage fort actif est constitué d'un alliage Zr/Fe/Ti/Be ou d'un alliage Zr/Ni/Ti.

5. Cellule manométrique ou cellule de mesure de la pression différentielle selon l'une des revendications 1 à 3, caractérisée en ce qu'au moins l'électrode (52 ; 82), (86) de la membrane (5 ; 8) ou des membranes (6, 7) sont, dans au moins une de léur zone marginale, revêtues d'un revêtement d'arrêt de brasage.

6. Procédé de fabrication d'une cellule manométrique capacitive, caractérisée en ce qu'elle comporte les étapes suivantes :
- un corps de base céramique 1 est, sur une première surface (12), pourvu d'une surface centrale concave (121), qui dans la direction allant vers une surface latérale (12) du corps de base (1) et jusqu'à cette dernière se poursuit par une surface convexe (124) comportant une ligne des sommets (125), surface convexe qui dans la zone de la ligne des sommets (125) est configurée comme une surface annulaire plane (126),
- une première électrode (122) est appliquée sur la surface centrale (121) et est connectée à une deuxième surface (13), opposée à la première surface (12) du corps de base (1),
- une membrane céramique 5, qui recouvre la première surface (12) du corps de base (1), est pourvue sur une surface intérieure plane (51) d'une deuxième électrode (52) dimensionnée de façon que, après application ultérieure de la membrane (5) sur la surface annulaire (126) du corps de base (1), elle arrive jusqu'à cette dernière,
- sur les parties de la surface convexe (124) situées entre la surface annulaire (126) et la surface latérale (11), on applique une quantité d'un métal d'apport (10) pour brasage fort actif suffisante pour assurer l'assemblage par brasage fort de la membrane (5) et du corps de base (1),
- on applique sur la surface annulaire (126) du corps de base (1) la surface intérieure (51), pourvue de la deuxième électrode (52), de la membrane (5), et
- on chauffe jusqu'à fusion du métal d'apport (10) pour brasage fort actif le corps de base (1) et la membrane (5), sous vide ou sous une atmosphère d'un gaz protecteur, puis on laisse refroidir.

7. Procédé de fabrication d'une cellule de mesure capacitive de la pression différentielle, caractérisé en ce qu'elle comporte les étapes suivantes :
- un corps de base céramique (2) est, sur une première surface (22) pourvu d'une première surface centrale concave (221), qui dans la direction allant vers une surface latérale (21) et jusqu'à cette dernière se poursuit par une première surface convexe (224) comportant une ligne des sommets (225), première surface convexe qui, dans la zone de la première ligne des sommets (225) est configurée comme une première surface annulaire plane (226),
- sur la première surface centrale (221), on applique une première électrode (221) et on la connecte à la surface latérale (21) du corps de base (2),
- le corps de base (2) est en outre, sur une deuxième surface (23) opposée à la première surface (22), pourvu d'une deuxième surface centrale concave (231), qui dans la direction de la surface latérale (21) du corps de base (2) et jusqu'à cette dernière se poursuit par une deuxième surface convexe (234), comportant une deuxième ligne des sommets (235), deuxième surface convexe qui dans la zone de la deuxième ligne des sommets (235) est configurée comme une deuxiéme surface annulaire plane (236),
- une deuxième électrode (232) est appliquée sur la deuxième surface centrale (231), et on en assure la connexion transversale à la surface latérale (21) du corps de base (2),
- une première membrane céramique (6), qui recouvre la première surface (22) du corps de base (2) est, sur une surface intérieure (61), pourvue d'une troisième électrode (62), dimensionnée de façon que, après application ultérieure de la première membrane (6) sur la première surface annulaire (226) du corps de base (2), arrive jusqu'à cette dernière,
- une deuxième membrane céramique (7), qui recouvre la deuxième surface (23) du corps de base (2), est pourvue, sur une surface intérieure plane (71), d'une quatrième électrode (72) dimensionnée de façon que, après application ultérieure de la deuxième membrane (7) sur la deuxième surface annulaire (236) du corps de base (2), elle arrive jusqu'à cette dernière,
sur les parties de la première surface convexe (224) du corps de base (2) se trouvant entre la première surface annulaire (226) et la surface latérale (21) et sur les parties de la deuxième surface convexe (234) du corps de base (2) se trouvant entre la deuxième surface annulaire (236) et la surface latérale (21), on applique une quantité de métal d'apport (10) pour brasage lourd actif suffisante pour assurer un assemblage par brasage fort de la première ou de la deuxième membrane (respectivement (6 et 7)) au corps de base (2),
on applique la surface intérieure (61), pourvue de la troisième électrode (62), de la première membrane (6) sur la première surface annulaire (226) du corps de base (2),
- on applique la surface intérieure (71), pourvue de la quatrième électrode (72), de la deuxième membrane sur la deuxième surface annulaire (236) du corps de base (2), et
on chauffe le corps de base (2) et les membranes (6, 7), sous vide ou sous une atmosphère d'un gaz protecteur, jusqu'à fusion du métal d'apport (10) pour brasage fort actif, purs on laisse refroidir.

8. Procédé de fabrication d'une cellule de mesure capacitive de la pression différentielle, caractérisée en ce qu'elle comporte les étapes suivantes :
- un premier corps de base céramique (3) est, sur une première surface (32), pourvu d'une première surface centrale concave (321), qui dans la direction allant vers une première surface latérale (31) du premier corps de base (3) et jusqu'à ce dernier se poursuit par une première surface convexe (324) comportant une première ligne des sommets (325), première surface convexe qui dans la zone de la première ligne des sommets (325) est configurée comme une première surface annulaire plane (326),
- une première électrode (322) est appliquée sur la première surface centrale, et on en assure la connexion transversale à une deuxième surface (33), opposée à la première surface (31), du premier corps de base (3),
- un deuxième corps de base céramique (3) est, sur une première surface (42), pourvu d'une deuxième surface centrale concave (421), qui dans la direction allant vers une deuxième surface latérale (41) du deuxième corps de base (4) et jusqu'à cette demière se poursuit par une deuxième surface convexe (4424) comportant une deuxième ligne de sommet (425), la deuxième surface convexe étant dans la zone de la deuxième ligne des sommets (425) configurée comme une deuxième surface annulaire plane (426),
- une deuxième électrode (42) est appliquée sur la deuxième surface centrale (421) et on en assure la connexion transversale à une deuxième surface (43), opposée à la première surface (42), du deuxième corps de base (4),
- une membrane céramique (8), qui recouvre la première surface (32) du premier corps de base (3), est, sur une première surface intérieure plane (81), pourvue d'une troisième électrode (82) dimensionnée de façon que cette dernière, après application ultérieure de la membrane (8) sur la première surface annulaire (326) du premier corps de base (3), arrive jusqu'à cette dernière,
- une deuxième surface intérieur plane (85), opposée à une première surface intérieure (81), de la membrane (8) est pourvue d'une quatrième électrode (86) dimensionnée de façon que cette dernière, après application ultérieure de la membrane (8) sur la deuxième surface annulaire (426) du deuxième corps de base (4), arrive jusqu'à cette dernière,
sur les parties de la première surface convexe (324) du premier corps de base (3) se trouvant entre la première surface annulaire (326) et la première surface latérale (31), et sur les parties de la deuxième surface convexe (424) du deuxième corps de base (4) se trouvant entre la deuxième surface annulaire (424) et la deuxième surface latérale (41), on applique une quantité d'un métal d'apport (10) pour brasage fort actif suffisante pour assurer l'assemblage, par brasage fort, de la membrane (8) respectivement au premier et au deuxième corps de base (respectivement 3 et 4),
- la première surface intérieure (81), pourvue de la troisième électrode (82), de la membrane (8) est appliquée sur la première surface annulaire (326) du premier corps de base (3),
- la deuxième surface intérieure (85), pourvue de la quatrième électrode (86), de la membrane (8) est appliquée sur la deuxième surface annulaire (426) du deuxième corps de base (4), et
- on chauffe jusqu'à fusion du métal d'apport (10) pour brasage fort actif le corps de base (3,4) et la membrane (8), sous vide ou sous une atmosphère d'un gaz protecteur, puis on laisse refroidir.

9. Procédé selon l'une des revendications 6 à 8, caractérisé en ce qu'au moins l'électrode (52 ; 82, 86) de la membrane (5 ; 8) ou des membranes (6, 7) est, au moins dans une zone marginale, recouverte d'un revêtement d'arrêt de brasage.
